# EUROPEAN PATENT SPECIFICATION

(11) **EP 0 474 138 B1**
(45) Date of publication and mention of the grant of the patent: **06.11.1996**
(21) Application number: 91114660.3
(22) Date of filing: 30.08.1991
(51) Int. Cl.: H04Q 7/22, H04Q 7/32, H04J 3/06, H04B 7/26

(54) **Timing logic for portable telephone in the GSM system**
Taktlogik für tragbares Telefon im GSM System
Logique de synchronisation pour téléphone portable dans le système GSM

(30) Priority: 05.09.1990 FI 904388
(43) Date of publication of application: 11.03.1992
(73) Proprietor: NOKIA MOBILE PHONES LTD., 24101 Salo (FI)
(72) Inventor: Silander, Jussi, SF-24100 Salo (FI)
(74) Representative: TER MEER - MÜLLER - STEINMEISTER & PARTNER

(56) References cited:
- EP-A- 0 233 963
- 39TH VEHICULAR TECHNOLOGY CONFERENCE vol. 1, May 1989, SAN FRANCISCO,US pages 169 - 174 SOLLENBERGER ET AL. 'Architecture and Implementation of an Efficient and Robust TDMA Frame Structure for Digital Portable Communications'
- 39TH VEHICULAR TECHNOLOGY CONFERENCE vol. 2, May 1989, SAN FRANCISCO,US pages 712 - 717 MALOBERTI 'Radio Transmission Interface of the Digital Paneuropean Mobile System'

## Description

The present invention relates to a timing logic with which the synchronization of a GSM portable telephone with the GSM network can be implemented and the synchronization in all operating conditions of the telephone maintained.

The essential principles of the GSM radio transmission system are summarised in the article "Radio Transmission Interface of the Digital Pan European Mobile System" by A. Maloberti, 39th IEEE Vehicular Technology Conference 1989, Volume II, pages 712-717.

GSM differs from the portable telephone systems currently used most strongly specifically regarding the radio system. In addition to the fact that fully digital transmission technique is applied on the radio path, also time division multiple access (TDMA) is used in the data transmission. The channels of the radio system can be divided into two categories: traffic channels (TCH), by which speech and user data are transmitted, and control channels (CCH). The control channels can in turn be divided into five categories, of which in the context of the description of the present invention reference is primarily made to the broadcast control channel (BCCH), which is a one-way channel from a base station (BS) to a mobile station (MS) and by which, for instance, synchronizing and frequency correction information is sent, by the aid of which the mobile station locks into the system. The channel structure is composed of consecutive frames. One such TDMA frame comprises eight time intervals. The duration of one time interval is about 576.9 ms, i.e., the duration of 156.25 bits. 26 or 51 TDMA frames constitute a multiple frame and similarly, 51 or 26 multiple frames constitute a superframe (= 1326 TDMA frames), and finally, 2048 superframes constitute one hyperframe (= 2,715,648 TDMA frames), its duration being 3 h 28 min 53 sec 760 ms. The TDMA frames are consecutively numbered from 0 to 2,715,647, and the numbering restarts after the last number. The bits belonging to each TDMA frame time interval are transmitted as a burst, these being of four kinds, and of them the frequency correction burst (FB) transmitted by the base station on the broadcast control channel BCCH is used for frequency synchronization of the mobile station and the synchronizing burst (SB) for time synchronization. The first mentioned burst is equivalent to an unmodulated carrier wave, and the latter includes for instance the TDMA frame number (FN).

The timing of time intervals, TDMA frames, the frames of traffic channel TCH and control channel CCH have been made proportional to joint counters which are continuously running irrespective of whether the base station and the mobile station are transmitting or not. In other words, after the mobile station has determined the correct setting of said counters, all of its functions have become synchronized with the base station serving at that moment. The MS times its transmission to the base station on the basis of the transmissions received therefrom. The base station transmits each mobile station an advancing value for the transmission, which it has measured from the propagation delay between its transmitted and received signal on the distance BS-MS-BS. The MS alters its timing accordingly, which results in any signals arriving at the base station from various mobile stations being compensated for the propagation delay.

According to the GSM specification, the timing state of the signals transmitted by the base station and the mobile station is determined by a quarter bit counter QN having a counting range from zero to 624, a bit counter BN with counting range 0 to 156, a time interval counter TN with counting range from zero to seven, and a TDMA frame number counter FN with counting range from zero to 2,715,647. The initial setting suggestion and incrementation of said counters are introduced in the specifications as well as the suggestion to store the equivalent values of adjacent base stations with a view to a handover situation. The mobile station is only allowed to transmit if its carrier wave frequency is the same as that of the base station and if its timing difference from the base station is not in excess of 2 microseconds. The timing difference is corrected using time steps of which the length corresponds to the duration of one quarter of a bit, and adjustment is made at time intervals not less than 1 sec, nor over 2 sec, until the timing difference is less than the duration of 1/2 bit.

The specifications give no exact instructions for synchronizing the mobile station with the GSM network; the manufacturers may themselves resolve their synchronizing problems within the scope of the specifications. The present invention is a solution to the synchronizing problem. The timing logic of the invention is composed of registers and counters, and it is characterized by that which is stated in the characteristic features part of claim 1.

The invention is described in detail, reference being made to the accompanying figures, in which:
- Fig. 1: presents the block diagram of the timing logic,
- Figs 2a and 2b: illustrate the position of the relative frame timing in relation to the absolute frame timing when the reception time interval is 0 and 3, and
- Figs 3a and 3b: illustrate the incrementation of the frame number counter when the listening time interval changes.

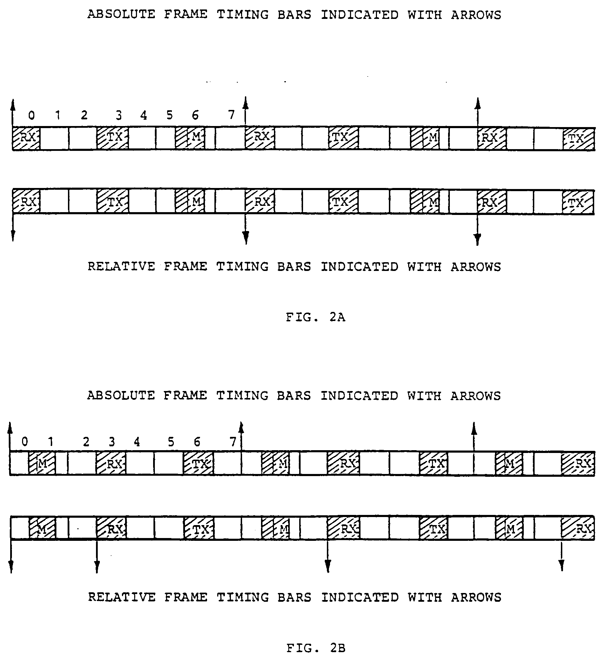

The timing logic described in the present invention makes use of a relative frame timing. This means that the portable telephone always perceives the reception time interval as zero time interval, irrespective of what the absolute time interval is which is stored in the timing register of the base station. In Figs 2a and 2b is visualized what the relative frame timing means. In Figs 2a and 2b, the symbol Rx stands for the receiving time interval, Tx for the transmission time interval and M for the monitoring time interval during which the portable telephone is listening to neighbouring base stations. The upper time interval continuum in Figs 2a and 2b refers to the absolute frame timing and the lower, to the relative frame timing. Thus, the length of the frame timing bar is 8 time intervals, and the frame timing bars have been indicated in the figures with arrows. In Fig. 2a, the reception interval is zero whereby in this case the relative frame timing bar is the same as the absolute frame timing bar.

In Fig. 2b, the reception time interval Rx of the portable telephone is the time interval No. 3, and therefore the relative frame timing bar used by the timing logic is offset by three time intervals from the absolute frame timing bar, which is stored only in the timing register of the own base station.

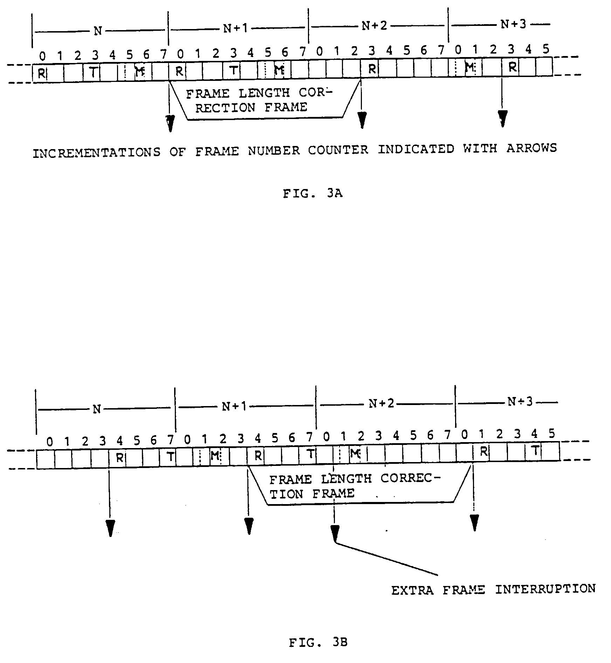

Figs 3a and 3b show graphically how changes in the listening intervals are taken into account in counting the frame numbers. The running number 0 to 7 above the time interval continua represents absolute time interval numbering; thus, the interval 0 to 7 represents one absolute frame. As was stated above, the telephone uses a relative frame rate, its frame number counter being incremented always at the beginning of a reception interval R, and this incrementing is indicated by arrows pointing downwards. The numbering n, n+1, n+2 etc. on top in Figs 3a and 3b, of the time line segments corresponding a length equal to the duration of one frame represents e.g. the absolute frame number. If now in a frame (Fig. 3a) the receiving interval for one reason or another changes from smaller to larger, e.g. from interval number 0 to number 3 (Fig. 3a), one can see that the frame number counter counts correctly in spite of the change, but if the listening interval changes from larger to smaller, e.g. from number 4 to number 1, we can see that during the frame n + 2 no incrementation at all would take place. In this instance the frame number counter in the telephone would have fallen behind the correct frame number at the frame n + 3. Therefore, an extra incrementation of the counter, or an extra frame interrupt, is effected during the frame length correction frame. It is thus understood that an extra frame interrupt is ordered when the absolute listening interval R changes in negative direction, for instance from 4 to 1, in which case one proceeds forward and skips one frame, as has been graphically shown in Fig. 3b. This matter is described more in detail below.

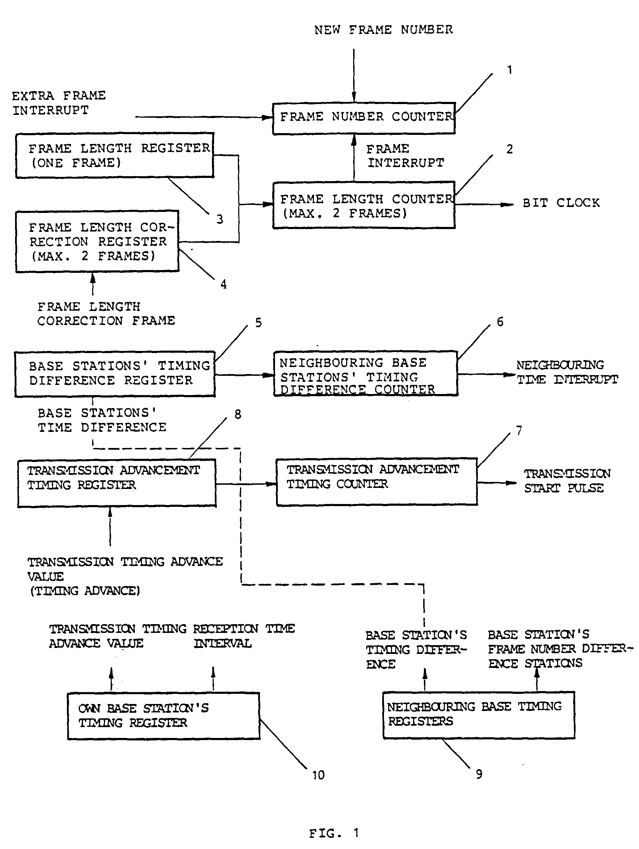

Figure 1 shows the counters and registers of the timing logic of the invention in the form of a block diagram. As mentioned on page 2, the mobile station needs for its synchronization information on the TDMA frame number FN (0-2,715,647), on the time interval number TN (0-7) and on the quarter bit number QN (0-624) with which synchronization can be performed. In addition, the corresponding information from the neighbouring base stations is required in view of handover situations. This information is supplied to the telephone by the base station. Four counters are used in the timing logic: the frame length counter 2, frame number counter 1, adjacent base stations timing difference counter 6, and advancing transmission timing counter 7. There are six registers: the frame length register 3, accomodating one TDNA frame or 8 time intervals, each of these containing 156.25 bits, the frame length correction register 3 its maximum length being two TDMA frames, or 16 time intervals, the base stations timing difference register, the transmission advancement timing register 5, own base station timing registers 10, and neighbouring base stations timing registers 9.

The basic interaction between said registers and counters and their interconnections are as follows, reference being made to Fig. 1.

The frame number counter 1 counts the running absolute frame number FN of the TDMA frames comprised in the hyperframe, which number can have, as mentioned on page 2, values from 0 to 2,715,647. The frame number counter 1 is incremented by means of a frame interrupt coming from the frame length counter 2 at the end of each relative TDMA frame, or it may also be incremented by means of an extra frame interrupt generated when the receiving time interval changes in negative direction, as was already described referring to Figs 3a and 3b. In connection with a change of base station, in the handover situation, the new base station gives the new frame number, which will be the counter reading, and starting from which the portable telephone will count the frame numbers by itself.

In the frame length register 3 the standard frame length, 8 x 156.25 bits is always loaded. The accuracy of the register is one quarter of a bit. The value in this register is loaded into the frame length counter 2 when there are no changes of timing.

A correction frame, counted from the timing change, is loaded into the frame length correction register 4. The length of the frame length correction frame is the difference of listening time intervals when the listening time interval changes. For instance, in the case shown in Fig. 3b the correction frame comprises 13 time intervals or 13 x 156.25 bits. The maximum length of the correction register 4 is 2 frames and its value is loaded into the frame length counter 2 when the time interval changes or when the timing slips more than the specification allows.

It is thus understood that normally in the frame length counter 2 is loaded the value of the frame length register 3 and when changes take place, the value of the frame length correction register 4. The counter 2 counts the frame length with the accuracy of one quarter of a bit, and therefore it also provides a bit clock of 1/4 bit accuracy for other uses in the telephone. This accuracy is the highest accuracy demanded in the GSM specification. The length of the frame length counter is two frames, and it generates the frame interruption in the frame number counter 1, thus incrementing it every time it flows over. Since now the frame length counter 2 counts the frame length with the accuracy of 1/4 bit and increments the frame number counter 1 so that the frame number is correct, this implies that accurate timing has been achieved. The bit number BN of the frame can be calculated according to the specification so that it is the integer part of the division QN/4, and the time interval counter TN is incremented every time when QN changes from 624 to 0.

The timing must be preserved also when base stations are switched, and for these so-called handover situations are needed according to the invention: the neighbouring base stations' timing registers 9, the base stations timing difference register 5, and the neighbouring base stations' timing difference counter 6. The timing function associated with such a handover situation shall now be described, reference being still made mainly to Fig. 1. In Figs 2 and 3 the time interval M represents the time, during which the MS is monitoring the neighbouring base stations. The MS scans all transmission frequencies, measures the signal levels of the carrier waves of the neighbouring base stations at each frequency and thererafter arranges the strongest six stations in a sequence. After sequencing, it receives on the broadcast control channel the requisite system parameters of the base stations from the synchronizing and BCCH bursts. The mobile station MS performs continuous sequence updating by continuously measuring the power, and at given intervals it receives a synchronizing burst. When among the measured signal levels appears a signal level surpassing the lowest signal level among the six stations kept in memory and having a frequency different from that of any one of the six stations kept in memory, it is ascertained that a new neighbouring station is concerned, and the station sequence is then updated. If, on the other hand, the frequency coincides with the frequency of one of the six stations in memory, decoding the synchronizing burst and its comparison with the synchronizing burst of the station in memory with the same frequency reveals that a new neighbouring station is concerned. These matters are more closely described in the GSM system specification. In this manner one is prepared to move over to the coverage area of any neighbouring base station.

In the base stations' timing difference register 5 is stored the information on the difference in frame timing bar between the own base station and a neighbouring base station when information is received from a neighbouring base station. It will load the timing difference into the neighbouring base stations timing difference counter 6, which counts the timing difference of the TDMA frames of the own base station and the neighbouring base stations and outputs a frame interrupt of the neighbouring cell on overflow. The interrupt states the moment at which starting reception of information from the neighbouring base station is commenced.

As described above, the timing difference between base stations is stored in the base stations' timing difference register 5. This difference is obtained from the neighbouring base stations' timing registers 9, which contain timing information relating to neighbouring base stations. Concerning the six strongest neighbouring base stations the timing difference between the own station and each neighbour has to be kept in storage, as well as the absolute frame number difference. The absolute frame number of a neighbouring base station and its timing difference (the difference between the frame of the own base station and that of the neighbouring base station) are obtained from the information received during the monitoring time interval M, as described above.

For the mobile station MS to be able to start its transmission precisely at the right moment, the transmission advance timing counter 7 supplies a start pulse for the transmission. In principle, the counter starts the count at the beginning of a frame and counts up to the transmission time interval, and taking into account the transmission advancement value which is obtained from measuring the signal propagation delay on the distance "base station - mobile station - base station " and the inherent delay in the logic of the telephone, the counter 7 counts the transmission advancement value and on overflow generates the transmission start pulse. The transmission start pulse gives the starting moment for the bit sequence to be transmitted.

The transmission advancement timing difference counter 7 receives the advancement value and the delay from the transmission advancement timing register 8, in which the transmission advancement value is stored, with which the base station controls the transmission time of the portable telephone. The portable telephone adds the delay of its own transmission logic to the advancement value. The timing register 8 in turn obtains the transmission advancement value from the timing registers 10 of its own base station. These registers contain timing information relating to the base station in use. The transmission advancement value comes from the base station (the base station transmits at every 13th frame) and it is stored in the register until the base station transmits a new value. The reception time interval, obtained from the timing registers 10, states the absolute reception time interval, which is used as basis for the relative timing. It is kept in storage in the timing register of the own base station.

In the foregoing the counters and registers required in the timing according to the invention have been briefly described. Their operation is described below more in detail, in the different operating states of the telephone. These operating states are as follows:
(1) initial synchronizing, in which the portable telephone is synchronized with the GSM network,
(2) listening state, in which the portable telephone listens to a connection call from the network,
(3) call establishing, in which speech connection is established, and
(4) active state, in which the call is in progress.

The following operations are carried out in the initial synchronizing: search of channels, in which the signal strength of all frequencies of the GSM network is measured and they are arranged by their magnitude; pure sine wave search (PSW), in which from one channel the sine wave frame present in its frame structure is found; search for synchronizing frame, in which the synchronizing frame present in the frame structure is found, and reception of the BCCH data, in which the system parameters are received from the network.

When the telephone is switched on, all timing registers are first initialized. During channel search and PSW search, the initialized values are used, that is, the frame length counter 2 is loaded from the frame length register 3, which has the standard frame length. After arranging the channels in the sequence according to magnitude of signal strength, the sine wave frame (PSW frame) is searched from the strongest channel, by the position of which the coarse frame timing can be calculated. Now the correction frame is written from the frame length correction register 4 into the frame length counter 2, correcting therewith the timing to be roughly correct. At this stage, the timing accuracy is on the order of a few bits, depending on the calculation algorithm used. The exact timing accuracy can be calculated from the synchronizing frame received from the same base station having the strongest signal. The synchronizing frame contains a long teaching sequence (a known bit sequence), by correlating which the timing is found with an accuracy of 1/4 bit. The correction frame for the precise timing is loaded into the frame length counter 2 via the frame length correction register 4. Subsequent to receiving the synchronizing frame, the portable telephone has become accurately synchronized (with 1/4 bit accuracy) with the network. From the synchronizing frame also the absolute frame number FN is calculated, which is loaded into the frame number counter 1. The reception of the BCCH data influences the timing that insofar therefrom can be ascertained whether the base station to which synchronization was made is a permissible base station for the particular portable telephone or whether the synchronizing procedure must be restarted to the next strongest base station. In the BCCH data reception exact timing is used.

After carrying out the initial synchronizing, and if a call is not immediately set up, the telephone remains in the listening state, in which it is listening for a connection call from the network. In the time between the calls the telephone is also in this state. As regards the timing, the listening state comprises the following operations: exact timing correction changing the time interval, reception of the signal strengths of neighbouring base stations, synchronizing frame and BCCH data, and switching base stations.

Correction of accurate timing has to be made according to the GSM specification if the timing slips more than two microseconds (a half bit) from its current value. The slip is measured by averaging over a constant time locations of the energy maxima of the pulse responses in the teaching sectors of bursts received. If the mean deviates more than half a bit from the current timing value, a timing correction is made. The correction is made by loading at 1 to 2 second intervals a correction frame in the frame length correction register 4, which corrects the timing by 1/4 bit. Correction frames are applied until the timing error is once again less than 1/2 bit.

In listening state the operation change of time interval implies changing the relative frame timing. The relative frame is counted as starting at the beginning of the listening time interval, as described above on pages 3 and 4. If the listening time interval changes to become larger, the timing correction is made by loading a correction frame through the frame length correction register 4 into the frame length counter 2 which changes the timing and the relative frame timing bar to be consistent with the new listening time interval. If the time interval changes from a longer to a shorter one, one frame is skipped. The skip over one frame must then be taken into account in the length of the correction frame. At a frame skip, an extra frame interrupt must be generated for the timing logic, so that the frame number counter 1 counting the absolute frame number FN might remain on the correct value. This aspect is described in the foregoing on page 4, referring to Figs 3a and 3b. When the reception time interval changes, the absolute reception time interval is stored in the own base station timing register 10.

In the third operation of the listening state, that is, when measuring the signal strengths of neighbouring base stations, the same timing is used. Accordance to the GSM specifications, the synchronizing frame and BCCH data must also be received from the six strongest neighbours. At receiving the synchronizing frame, the sine wave frame, the PSW frame, of the neighbouring base station is first found using the own base station's timing.

The location of the PSW frame reveals the coarse timing of the neighbouring base station. The difference between the exact timing of the own base station and the rough timing of the neighbouring base station is loaded into the base stations' timing difference register 5, which loads it into the neighbouring base stations' timing difference counter 6. When the synchronizing time interval of a neighbouring base station is being received, the base stations timing difference counter 6 generates, on the basis of the timing difference, a frame interrupt in the neighbouring cell at that moment when the reception of the synchronizing frame of the neighbouring base station is commenced. The synchronizing frame yields the accurate difference for the timing between the neighbouring base station and the own base station. This accurate timing difference between the base stations is loaded into the base stations timing register 5 and hence into the base stations timing difference counter 6. This counter 6 generates a frame interrupt in the neighbouring cell, which tells the starting moment of BCCH data reception. The timing difference between base stations is also stored in the neighbouring base stations' timing register 9. From the received synchronizing frame also the frame number difference between the frame numbers of the own and the neighbouring base station is calculated and stored in the neighbouring base stations' timing register 9. Said procedure is performed for all six strongest neighbours. When a new base station appears among the six strongest neighbouring base stations, its synchronizing and BCCH frames are received, and the timing difference between base stations and frame number difference are calculated for it, according to the procedure described above.

Base stations are switched when during the movement of the portable telephone one of the neighbouring base stations becomes better than the current own base station. As regards timing, this means that on the basis of the timing difference of the neighbouring base station, a frame length correction frame is calculated, with which a timing correction is made in connection with base station switching. Similarly, on the basis of the frame number difference of the base stations, the absolute frame number FN of the new base station is calculated which is loaded into the frame number counter 1. Since the previous own base station at the base station switching becomes a new neighbouring base station, its timing difference and frame number difference relative to the new own base station has to be calculated. In practice this is done by complementing the timing and frame number difference, and associating them with the previous own base station.

The timing in initial synchronizing and in the listening state is explained above. Thirdly, the operation of the timing logic of the invention in call establishing is now described. As regards timing, the following operations are included in call establishing: correction of exact timing, changing the time interval, timing of transmission, reception of the signal strengths and synchronizing frame of neighbouring base stations, and base station switching.

Correction of the exact timing and change of time interval are carried out as explained in the preceding paragraph in connection with the description of the listening state.

Advancing transmission is used because the distance of the portable telephone from the base station is continuously changing, and the base station corrects the timing change due to the movement, with the transmission advancing value. When data is transmitted for the first time to a base station, the portable telephone uses the transmission advancing value 0. After receiving a first data burst transmitted by the portable telephone, the base station BS measures the transmission advancement value and sends it to the portable telephone included in its control frame. The transmission advancement value plus correction value for the delay in the transmission logic are written into the transmission advancing timing register 8, which loads it into the transmission advancement timing counter 7. The timing counter 7 calculates the advancement value and generates the transmission start pulse at the moment when the transmission has to be started. The transmission advancement value is stored in the own base station's timing register 10. When the base station transmits a new transmission advancement value, the contents of the transmission advancing timing register is corrected and the new advance value is stored in the own station's advance register 10.

During the call establishment, measuring of the signal strengths of neighbouring base stations and reception of the synchronizing frames of the six strongest neighbours are carried out as has already been described in the preceding paragraph.

Base station switching during call establishing is done as described above.

In the fourth operating state, that is, in the active state, the timing logic of the invention comprises the following operations in view of timing: correction of exact timing, change of time interval, timing of transmission, reception of signal strengths and synchronizing frame of the neighbouring base stations, and base station switching.

These operations are not different from what is described above in the contexts of initial synchronizing, listening state and call establishing; they are obvious to a person skilled in the art, and they are not therefore described again in detail in the present context.

In the manner described above, the timing functions of a GSM portable telephone and its operation in the network can be implemented in all operating states. The timing logic of the invention is implementable either with software or by hardware design. The software alternative has the advantage of flexibility, but it imposes a heavy load on the processor with which the timing should be carried out. The hardware alternative would present the advantage of small size and low power consumption, while hampered by high modification cost. The hardware can easily be made part of a VLSI circuit. Owing to the modular nature of the timing logic of the invention, it can be implemented as a combination of the hardware design and software design, whereby the good points of both can be combined.

## Claims

1. Timing logic apparatus in a portable telephone of the GSM system employing time division multiple access (TDMA), the system channel structure consisting of consecutive numbered TDMA frames with 8 time intervals each, the base station sending a transmission advancement value to each portable telephone individually, and a broadcast control channel frequency correction burst, synchronizing burst and the system parameters, characterized in that the logic comprises
- a frame length counter (2), which on overflow increments a frame number counter (1) and in which the value from a frame length register (3) containing the standard frame length or the value from a correction register (4) is loaded,
- a neighbouring base stations timing register (9), in which are stored the frame number differences between the own base station and at least six neighbouring base stations, and the timing difference values of the respective frame timing bars, and from which the timing difference value of one frame timing bar at a time is loaded into a base station timing difference counter (5) and from there further into a neighbouring base stations timing difference counter (6), which, on overflow, indicates the moment from which the reception of the synchronizing frame or BCCH data from a neighbouring base station is commenced,
- own base station timing registers (10), in which are stored the transmission advancement value given by the own base station and the value of the absolute reception time interval, and from which the advancement value is loaded into a transmission advancement timing register (8), wherefrom it is loaded into a transmission advancement timing counter (7), which when on overflow, gives the start pulse for transmission.

2. Timing logic according to claim 1, characterized in that the frame length correction register (4) is employed for changing the timing.

3. Timing logic according to claim 2, characterized in that if the reception time interval (Rx) changes from larger to smaller, the frame number counter (1) is incremented during the frame length correction frame.

4. Timing logic according to claim 1, characterized in that the timing difference and frame number difference relative to the own base station of at least six strongest neighbouring base stations are calculated in that the rough value of the timing difference obtained in the frequency correction burst is loaded from the base station timing difference register (5) into the neighbouring base stations' timing difference counter (6), which on receiving data related to each neighbouring base station generates a frame interrupt at the moment of receiving the synchronizing frame of the neighbouring base station, and from the synchronizing frame said timing difference and the frame number difference are calculated, these being stored in the base station timing difference register (5) and in the neighbouring base stations timing register (9).

5. Timing logic according to claim 4, characterized in that on base station switching, a frame length correction frame is calculated on the basis of the timing difference stored in the neighbouring base stations timing register (9) which correction frame is loaded into the frame length correction register (4), and a new frame number to be set in the frame number counter (1) is calculated from the base station frame number difference.

6. Timing logic according to claim 1, characterized in that the advancement value transmitted by the base station is stored in the own base station timing register (10), wherefrom it is loaded into the transmission advancement timing register (7), the contents of which are then loaded into the transmission advancement timing counter (7), which generates a transmission start pulse.

7. Timing logic according to claim 1, characterized in that the relative frame timing bar is used in the timing, whereby the timing logic maintains the reception time interval (Rx) always at zero time interval regardless of what its absolute time interval may be.

## Patentansprüche

1. Taktlogikeinrichtung in einem tragbaren Telefon gemäß dem GSM-System, das Zeitvielfachzugriff (TDMA) verwendet, wobei die Systemkanalstruktur aus aufeinanderfolgend numerierten TDMA-Rahmen mit jeweils 8 Zeitintervallen besteht, wobei die Basisstation individuell an jedes tragbare Telefon einen Sendevoreilungswert, ein Rundruf-Steuerkanal-Frequenzkorrektur-Signalpaket, ein Synchronisier-Signalpaket und die Systemparameter sendet; **dadurch gekennzeichnet, daß** die Logik folgendes aufweist:
- einen Rahmenlängenzähler (2), der bei Überlauf einen Rahmennummernzähler (1) inkrementiert, in den der Wert in einem Rahmenlängenregister (3), das die Standardrahmenlänge enthält, oder der Wert in einem Korrekturregister (4) geladen wird;
- ein Zeitsteuerregister (9) für benachbarte Basisstationen, in das die Rahmennummerndifferenzen zwischen der eigenen Basisstation und mindestens sechs benachbarten Basisstationen sowie die Zeitsteuerdifferenzwerte der jeweiligen Rahmenzeitsteuerbalken eingespeichert werden, und aus dem der Zeitsteuerdifferenzwert für einen Rahmenzeitsteuerbalken zu einem Zeitpunkt in einen Zeitsteuerdifferenzzähler (5) für eine Basisstation und von dort ferner in einen Zeitsteuerdifferenzzähler (6) für benachbarte Basisstationen geladen wird, der, bei Überlauf, den Moment anzeigt, zu dem mit dem Empfang des Synchronisierrahmens oder von BCCH-Daten von einer benachbarten Basisstation zu beginnen ist;
- Zeitsteuerregister (10) für die eigene Basisstation, in die der von der eigenen Basisstation vergebene Sendevoreilungswert und der Wert des absoluten Empfangszeitintervalls eingespeichert werden und aus denen der Voreilungswert in ein Sendevoreilungs-Zeitsteuerregister (8) geladen wird, aus dem er in einen Sendevoreilungs-Zeitsteuerzähler (7) geladen wird, der dann, wenn er überläuft, den Startimpuls für einen Sendevorgang liefert.

2. Taktlogik nach Anspruch 1, **dadurch gekennzeichnet, daß** das Rahmenlängen-Korrekturregister (4) zum Ändern der zeitlichen Steuerung verwendet wird.

3. Taktlogik nach Anspruch 2, **dadurch gekennzeichnet, daß** dann, wenn sich das Empfangszeitintervall (Rx) von einem größeren auf einen kleineren Wert ändert, der Rahmennummernzähler (1) während des Rahmenlängen-Korrekturrahmen inkrementiert wird.

4. Taktlogik nach Anspruch 1, **dadurch gekennzeichnet, daß** die Zeitsteuerungsdifferenz und die Rahmennummerndifferenz bezogen auf die eigene Basisstation für mindestens die sechs stärksten benachbarten Basisstationen dadurch berechnet werden, daß der grobe Wert für die Zeitsteuerungsdifferenz, wie beim Frequenzkorrektur-Signalpaket erhalten, vom Zeitsteuerdifferenzregister (5) für die Basisstation in den Zeitsteuerdifferenzzähler (6) für benachbarte Basisstationen geladen wird, der dann, wenn er Daten betreffend jede benachbarte Basisstation empfängt, einen Rahmeninterrupt in dem Moment erzeugt, in dem er den Synchronisierrahmen der benachbarten Basisstation empfängt, wobei aus dem Synchronisierrahmen die Zeitsteuerdifferenz und die Rahmennummerndifferenz berechnet werden, wobei diese in das Zeitsteuerdifferenzregister (5) für die Basisstation und in das Zeitsteuerregister (9) für die benachbarten Basisstationen eingespeichert werden.

5. Taktlogik nach Anspruch 4, **dadurch gekennzeichnet, daß** beim Umschalten zwischen Basisstationen ein Rahmenlängen-Korrekturrahmen auf Grundlage der im Zeitsteuerregister (9) für benachbarte Basisstationen abgespeicherten Zeitsteuerdifferenz berechnet wird, wobei dieser Korrekturrahmen in das Rahmenlängen-Korrekturregister (4) geladen wird, und eine neue Rahmennummer, die in den Rahmennummernzähler (1) einzuschreiben ist, aus der Basisstations-Rahmennummerndifferenz berechnet wird.

6. Taktlogik nach Anspruch 1, **dadurch gekennzeichnet, daß** der von der Basisstation gesendete Voreilungswert in das Zeitsteuerregister (10) für die eigene Basisstation eingespeichert wird, von wo er in das Sendevoreilungs-Zeitsteuerregister (7) geladen wird, dessen Inhalt dann in den Sendevoreilungs-Zeitsteuerzähler (7) geladen wird, der einen Sendestartimpuls erzeugt.

7. Taktlogik nach Anspruch 1, **dadurch gekennzeichnet, daß** bei der zeitlichen Steuerung der relative Rahmenzeitsteuerbalken verwendet wird, wodurch die Taktlogik das Empfangszeitintervall (Rx) immer, unabhängig vom Wert des absoluten Zeitintervalls, auf dem Nullzeitintervall hält.

## Revendications

1. Dispositif de logique de synchronisation dans un téléphone portable du système GSM employant l'accès multiple par répartition dans le temps (TDMA), la structure de canaux du système étant constituée de trames à accès multiple par répartition dans le temps, numérotées et consécutives avec 8 intervalles de temps chacune, la station de base émettant une valeur de progression d'émission à chaque téléphone portable individuellement et une rafale de correction de fréquence de canal de commande de radiodiffusion, une rafale de synchronisation et les paramètres du système, caractérisé en ce que la logique comprend
- un compteur de longueur de trame (2) qui, sur débordement, incrémente un compteur de numéro de trame (1) et dans lequel la valeur provenant d'un registre de longueur de trame (3) contenant la longueur de trame standard ou la valeur provenant du registre de correction (4) est chargée,
- un registre de synchronisation de stations de base voisines (9), dans lequel sont mémorisées les différences de numéro de trame entre la station de base propre et au moins six stations de base voisines et les valeurs de différence de synchronisation des barres de synchronisation de trames respectives et à partir duquel la valeur de différence de synchronisation d'une barre de synchronisation de trame à un moment est chargée dans un compteur de différence de synchronisation de stations de base (5) et à partir de celui-ci, de plus, dans un compteur de différence de synchronisation de stations de base voisines (6) qui, sur débordement, indique le moment auquel la réception de la trame de synchronisation ou des données BCCH provenant d'une station de base voisine est commencée,
- des registres de synchronisation de la station de base propre (10) dans lesquels sont mémorisées la valeur de progression d'émission donnée par la station de base propre et la valeur de l'intervalle de temps de réception absolue et à partir duquel la valeur de progression est chargée dans un registre de synchronisation de progression d'émission (8), à partir duquel il est chargé dans un compteur de synchronisation de progression d'émission (7) qui, sur débordement, délivre l'impulsion de début pour l'émission.

2. Logique de synchronisation selon la revendication 1, caractérisée en ce que le registre de correction de longueur de trame (4) est employé pour changer la synchronisation.

3. Logique de synchronisation selon la revendication 2, caractérisée en ce que si l'intervalle de temps de réception (Rx) change d'une valeur importante à une valeur plus faible, le compteur de numéro de trame (1) est incrémenté pendant la trame de correction de longueur de trame.

4. Logique de synchronisation selon la revendication 1, caractérisée en ce que la différence de synchronisation et la différence de numéro de trame, par rapport à la station de base propre et à, au moins, six stations de base voisines les plus puissantes sont calculées et, en ce que la valeur approximative de la différence de synchronisation obtenue dans la rafale de correction de fréquence est chargée à partir du registre de différence de synchronisation de station de base (5) dans le compteur de différence de synchronisation de stations de base voisines (6), qui, sur réception des données se rapportant à chaque station de base voisine produit une interruption de trame au moment de la réception de la trame de synchronisation de la station de base voisine, et à partir de la trame de synchronisation, ladite différence de synchronisation et la différence de numéro de trame sont calculées, celles-ci étant mémorisées dans le registre de différence de synchronisation de station de base (5) et dans le registre de synchronisation de stations de base voisines (9).

5. Logique de synchronisation selon la revendication 4, caractérisée en ce que sur commutation des stations de base, une trame de correction de longueur de trame est calculée sur la base de la différence de synchronisation mémorisée dans le registre de synchronisation de stations de base voisines (9), laquelle trame de correction est chargée dans le registre de correction de longueur de trame (4), et un nouveau numéro de trame qui doit être chargé dans le compteur de numéro de trame (1) est calculé à partir de la différence de numéro de trame de station de base.

6. Logique de synchronisation selon la revendication 1, caractérisée en ce que la valeur de progression émise par la station de base est mémorisée dans le registre de synchronisation de la station de base propre (10), à partir duquel elle est chargée dans le compteur de différence de synchronisation de progression d'émission (7), dont les contenus sont ensuite chargés dans le compteur de synchronisation de progression d'émission (7) qui produit une impulsion de début d'émission.

7. Logique de synchronisation selon la revendication 1, caractérisée en ce que la barre de synchronisation de trame relative est utilisée pendant la synchronisation, d'où il résulte que la logique de synchronisation maintient l'intervalle de temps de réception (Rx) toujours égal à l'intervalle de temps zéro sans tenir compte du fait de la valeur que peut avoir l'intervalle de temps absolu.
